# EUROPEAN PATENT SPECIFICATION

(11) **EP 3 154 344 B1**
(45) Date of publication and mention of the grant of the patent: **19.02.2020**
(21) Application number: 15806547.4
(22) Date of filing: 09.06.2015
(51) Int. Cl.: A01N 25/12, A01N 25/32, A01N 43/40, A01N 43/42, A01N 43/54, A01N 43/90, A01P 13/00

(54) **SOLID HERBICIDAL COMPOSITIONS CONTAINING A SAFENER**
FESTE HERBIZIDE ZUSAMMENSETZUNGEN MIT EINEM SAFENER
COMPOSITIONS HERBICIDES SOLIDES CONTENANT UN PHYTOPROTECTEUR

(30) Priority: 10.06.2014 US 201462010030 P; 01.10.2014 US 201462058488 P
(43) Date of publication of application: 19.04.2017
(73) Proprietor: Dow AgroSciences LLC, Indianapolis, IN 46268 (US)
(72) Inventor: HERCAMP, Joseph C., Indianapolis, IN 46268 (US); LI, Mei, Indianapolis, IN 46268 (US); SHAO, Hui, Indianapolis, IN 46268 (US); SHEN, Hao, Indianapolis, IN 46268 (US); ZHANG, Hong, Carmel, IN 46032 (US)
(74) Representative: f & e patent
(86) International application number: PCT/US2015/034784
(87) International publication number: WO 2015/191500

(56) References cited:
- WO-A2-2013/034513
- US-A1- 2008 032 890
- US-A1- 2013 109 725
- US-A1- 2013 190 176

## Description

Agricultural formulation products must be physically and chemically stable for a specified period of time in order to have commercial utility. There are many causes of formulation instabilities, including active ingredient instability (e.g., chemical degradation of the active ingredient), physical instabilities, such as phase separations (Oswald ripening, crystallization, sedimentations, creamings, etc.) or environmental factors (temperature, humidity/moisture, etc.). In today's agrichemical market, it is common to develop new formulations that contain multiple active ingredients, safeners, and/or adjuvants, etc., in order to achieve the optimal spectrum, efficacy, and delivery efficiency, which consequently makes developing formulations more challenging.

US 2008/0032890 A1 relates to herbicidal compositions and describes, among others, a granular formulation consisting of pyroxsulam, kaolin clay, sodium polycarboxylate, cloquintocet mexyl, sodium ligninsulfonate, polymethyl urea resin, N-methyl oleyl taurate. and citric acid. WO 2013/034513 A2 relates to herbicidal dispersion compositions comprising polymeric microparticles containing a herbicide, which may be an acetolactate synthase (ALS) inhibitor herbicide. US2013/0109725 A1 relates to pesticide-containing granules with improved dispersion properties which may comprise e.g. an ALS enzyme inhibitor herbicide or halauxifen. US 2013/0190176 A1 relates to solid herbicidal compositions of improved storage stability and discloses solid compositions comprising, among others, an ALS enzyme inhibitor herbicide, cloquintocet mexyl and a significant amount of liquid built-in adjuvants.

### SUMMARY

A solid herbicidal composition is provided. The solid herbicidal composition includes:
a) from 50 grams active ingredient per kilogram (g ai/kg) to 600 g ai/kg, with respect to the total composition, of a first herbicide active ingredient selected from a group consisting of azimsulfuron, bensulfuron-methyl, cinosulfuron, cloransulam-methyl, cyclosulfamuron, diclosulam, ethoxysulfuron, florasulam, flucetosulfuron, flumetsulam, flupyrsulfuron, foramsulphuron, halosulfuron-methyl, imazaquin, imazethabenz, imazethapyr, imazamox, imazosulfuron, iodosulfuron, mesosulphuron, metazosulfuron, metosulam, metsulfuron, nicosulfuron, penoxsulam, primisulfuron-methyl, propyrisulfuron, pyrazosulfuron-ethyl, rimsulfuron, sulphosulphuron, thifensulfuron, trifloxysulfuron, tritosulphuron, and salt or esters thereof and the compounds of the Formula 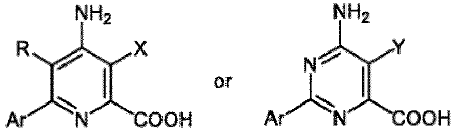 wherein
   Ar represents a phenyl group substituted with one to four substituents independently selected from the group consisting of halogen, C₁-C₆ alkyl, C₁-C₆ alkoxy, C₂-C₄ alkoxyalkyl, C₂-C₆ alkylcarbonyl, C₁-C₆ alkylthio, C₁-C₆ haloalkyl, C₁-C₆ haloalkoxy, C₂-C₄ haloalkoxyalkyl, C₂-C₆ haloalkylcarbonyl, C₁-C₆ haloalkylthio, -OCH₂CH₂-, -OCH₂CH₂CH₂-,
      -OCH₂O-, and -OCH₂CH₂O-;
   R represents H or F;
   X represents Cl or vinyl;
   Y represents Cl, vinyl or methoxy; and
   salts and esters thereof;
b) from 50 grams active ingredient per kilogram (g ai/kg) to 600 g ai/kg, with respect to the total composition, of pyroxsulam;
c) from 50 g ai/kg to 600 g ai/kg, with respect to the total composition, of cloquintocet acid or a salt thereof;
d) from 30 g ai/kg to 250 g ai/kg, with respect to the total composition, of a lignosulfonate salt;
e) from 10 g/kg to 100 g/kg, with respect to the total composition, of an anionic surfactant selected from the group consisting of salts of alkyl sulfates, alkylarylsulfonate salts, soaps, alkylnaphthalene-sulfonate salts, dialkyl esters of sulfosuccinate salts, salts of N-alkyl-N-fatty acid taurates; salts of mono- and dialkyl phosphate esters; and salts of polycarboxylates; and
f) from 50 g/kg to 250 g/kg, with respect to the total composition, of a solid buffer.

Also described are methods of preparing the solid herbicidal compositions described herein.

### DETAILED DESCRIPTION

Described herein are solid herbicide compositions that include a first herbicide active ingredient, pyroxsulam, cloquinocet acid or salt thereof (a herbicide safener), a dispersant, an anionic surfactant, and a solid buffer. These solid herbicide compositions can be in the form of granules, e.g., water dispersible granules. The solid herbicide compositions described herein have excellent storage stability and can be produced in a simple and efficient manner. In some embodiments, the composition is physically and chemically stable at 54°C for 4 weeks. The solid herbicide compositions readily wet, disintegrate, disperse, and form stable suspensions in water, even cold water (e.g., 5°C). The solid herbicidal compositions described herein can be in the form of extruded granules that are stable during storage at elevated temperature and quickly wet, disintegrate, and disperse to form a stable suspension in cold water. Additionally, the solid herbicide compositions described herein maintain herbicidal efficacy and crop safety when used to control weeds in cereal crops by spray application.

Herbicide active ingredients useful as the first herbicide active ingredient in the solid herbicide compositions described herein are selected from a group of compounds (Group A). As used herein, Group A compounds include the above mentioned ALS enzyme inhibitor herbicides and compounds of the Formula 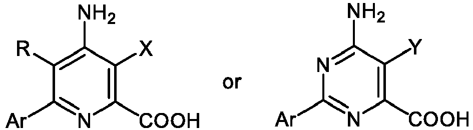 wherein
Ar represents a phenyl group substituted with one to four substituents independently selected from the group consisting of halogen, C₁-C₆ alkyl, C₁-C₆ alkoxy, C₂-C₄ alkoxyalkyl, C₂-C₆ alkylcarbonyl, C₁-C₆ alkylthio, C₁-C₆ haloalkyl, C₁-C₆ haloalkoxy, C₂-C₄ haloalkoxyalkyl, C₂-C₆ haloalkylcarbonyl, C₁-C₆ haloalkylthio, -OCH₂CH₂-, - OCH₂CH₂CH₂-,
   -OCH₂O-, and -OCH₂CH₂O-;
R represents H or F;
X represents Cl or vinyl;
Y represents Cl, vinyl or methoxy;
and their salts and esters.

Examples of herbicide active ingredients useful as the first herbicide active ingredient in the solid herbicidal compositions described herein include the ALS (acetolactate synthase) enzyme inhibitor class of herbicides such as, for example, the sulfonylureas, the triazolopyrimidinesulfonamides, and the imidazolinones. The ALS inhibiting herbicide active ingredients include azimsulfuron, bensulfuron-methyl, cinosulfuron, cloransulam-methyl, cyclosulfamuron, diclosulam, ethoxysulfuron, florasulam, flucetosulfuron, flumetsulam, flupyrsulfuron, foramsulphuron, halosulfuron-methyl, imazaquin, imazethabenz, imazethapyr, imazamox, imazosulfuron, iodosulfuron, mesosulphuron, metazosulfuron, metosulam, metsulfuron, nicosulfuron, penoxsulam, primisulfuron-methyl, propyrisulfuron, pyrazosulfuron-ethyl, pyroxsulam, rimsulfuron, sulphosulphuron, thifensulfuron, trifloxysulfuron, tritosulphuron, and salt or ester derivatives thereof.

Additional examples of herbicides useful as the first herbicide active ingredient in the solid herbicidal compositions described herein and described in Group A (and their salts and esters) include, for example, compounds disclosed in U.S. Patent Nos. 7,314,849 B2; 7,300,907 B2; 7,786,044 B2; and 7,642,220 which are illustrated by the above Formula given above.

In some embodiments, the first herbicide active ingredient is a compound having the following formula 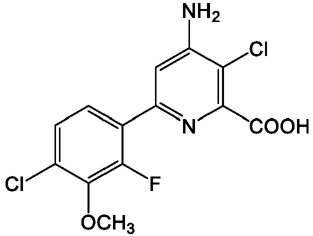 or a C₁-C₆ alkyl ester or salt thereof, e.g., the methyl ester, also known as halauxifen-methyl.

In some embodiments, the first herbicide active ingredient is a compound having the following formula 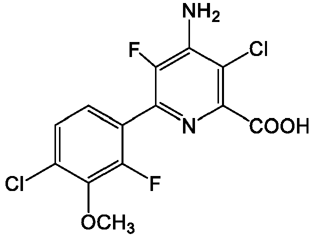 or a C₁-C₁₂ alkyl or C₇-C₁₂ arylalkyl ester or salt thereof, *e.g.,* the benzyl ester, referred to herein as Compound A.

In one embodiment the solid herbicidal composition may include halauxifen-methyl.

In another embodiment the solid herbicidal composition may include florasulam.

The solid herbicidal compositions described herein contain, with respect to the total composition, from about 50 grams active ingredient per kilogram (g ai/kg) to about 600 g ai/kg of the first herbicide active ingredient. In some embodiments, the solid herbicide compositions described herein may contain from about 50 g ae/kg to about 500 g ae/kg, from about 50 g ae/kg to about 400 g ae/kg, from about 50 g ae/kg to about 300 g ae/kg, from about 50 g ae/kg to about 200 g ae/kg, from about 50 g ae/kg to about 150 g ae/kg, or from about 50 g ae/kg to about 100 g ae/kg of the first herbicide active ingredient. In some embodiments, the solid herbicide compositions described herein may contain from about 100 g ae/kg to about 600 g ae/kg, from about 150 g ae/kg to about 600 g ae/kg, from about 150 g ae/kg to about 500 g ae/kg, from about 150 g ae/kg to about 400 g ae/kg, from about 150 g ae/kg to about 350 g ae/kg, from about 150 g ae/kg to about 300 g ae/kg, from about 150 g ae/kg to about 250 g ae/kg, from about 200 g ae/kg to about 600 g ae/kg, from about 250 g ae/kg to about 600 g ae/kg, from about 250 g ae/kg to about 500 g ae/kg, from about 300 g ae/kg to about 500 g ae/kg, from about 350 g ae/kg to about 475 g ae/kg, from about 400 g ae/kg to about 475 g ae/kg, or from about 430 g ae/kg to about 460 g ae/kg of the first herbicide active ingredient.

The solid herbicidal compositions described herein may contain, with respect to the total composition, from about 50 grams active ingredient per kilogram (g ai/kg) to about 600 g ai/kg of pyroxsulam. In some embodiments, the solid herbicide compositions described herein may contain from about 50 g ae/kg to about 500 g ae/kg, from about 50 g ae/kg to about 400 g ae/kg, from about 50 g ae/kg to about 300 g ae/kg, from about 50 g ae/kg to about 200 g ae/kg, from about 50 g ae/kg to about 150 g ae/kg, or from about 50 g ae/kg to about 100 g ae/kg of pyroxsulam. In some embodiments, the solid herbicide compositions described herein may contain from about 100 g ae/kg to about 600 g ae/kg, from about 150 g ae/kg to about 600 g ae/kg, from about 150 g ae/kg to about 500 g ae/kg, from about 150 g ae/kg to about 400 g ae/kg, from about 150 g ae/kg to about 350 g ae/kg, from about 150 g ae/kg to about 300 g ae/kg, from about 150 g ae/kg to about 250 g ae/kg, from about 200 g ae/kg to about 600 g ae/kg, from about 250 g ae/kg to about 600 g ae/kg, from about 250 g ae/kg to about 500 g ae/kg, from about 300 g ae/kg to about 500 g ae/kg, from about 350 g ae/kg to about 475 g ae/kg, from about 400 g ae/kg to about 475 g ae/kg, or from about 430 g ae/kg to about 460 g ae/kg of pyroxsulam.

The solid herbicide compositions described herein also include cloquintocet acid (CQC acid) or a salt thereof. CQC acid is a herbicide safener and has the following chemical structure: 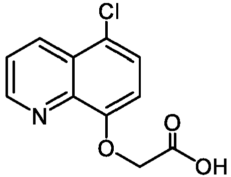 CQC acid functions as a herbicide safener by reducing the phytotoxic effects of the herbicide on crops to which it is applied. In some embodiments the herbicide safener used in the solid herbicide compositions described herein may comprise a salt of cloquintocet acid containing one or more cations selected from sodium, potassium, and the class of organo ammonium cations wherein the organo ammonium cations may have from 1 to about 12 carbon atoms. Exemplary organo ammonium cations include, for example, isopropyl ammonium, diglycol ammonium (2-(2-aminoethoxy)ethanol ammonium), dimethyl ammonium, diethyl ammonium, triethyl ammonium, monoethanol ammonium, dimethylethanol ammonium, diethanol ammonium, triethanol ammonium, triisopropanol ammonium, tetramethyl ammonium, tetraethylammonium, *N,N,N-*trimethylethanol ammonium (choline), and N,N-bis-(3-aminopropyl)methyl ammonium (BAPMA).

The herbicide safener used in the solid herbicide compositions described herein contains, with respect to the total composition, from about 50 g ae/kg to about 600 g ae/kg of cloquintocet acid or a salt thereof. In some embodiments the herbicide safener may comprise from about 50 g ae/kg to about 300 g ae/kg, from about 50 g ae/kg to about 200 g ae/kg, from about 50 g ae/kg to about 150 g ae/kg, from about 50 g ae/kg to about 125 g ae/kg, from about 50 g ae/kg to about 100 g ae/kg, from about 50 g ae/kg to about 80 g ae/kg, or from about 50 g ae/kg to about 70 g ae/kg of cloquintocet acid or a salt thereof. In some embodiments the herbicide safener may comprise from about 100 g ae/kg to about 600 g ae/kg, from about 150 g ae/kg to about 600 g ae/kg, from about 200 g ae/kg to about 600 g ae/kg, from about 200 g ae/kg to about 500 g ae/kg, from about 200 g ae/kg to about 400 g ae/kg, from about 200 g ae/kg to about 350 g ae/kg, from about 200 g ae/kg to about 300 g ae/kg, from about 200 g ae/kg to about 250 g ae/kg, or from about 200 g ae/kg to about 225 g ae/kg of cloquintocet acid or a salt thereof. In some embodiments the herbicide safener may comprise from about 300 g ae/kg to about 600 g ae/kg, from about 350 g ae/kg to about 500 g ae/kg, from about 400 g ae/kg to about 500 g ae/kg, or from about 425 g ae/kg to about 475 g ae/kg of cloquintocet acid or a salt thereof.

In some embodiments the weight ratio, on an ae basis, of the cloquintocet acid safener or salt thereof, to the one or more herbicide active ingredients in the solid herbicide compositions described herein may range from about 10:1 to about 1:10, from about 5:1 to about 1:5, from about 4:1 to about 1:4, from about 3:1 to about 1:3, or from about 2:1 to about 1:2.

The solid herbicide compositions described herein further include a dispersant such as a lignosulfonate salt. Examples of lignosulfonate salts include sodium lignosulfonates and/or calcium lignosulfonates. Examples of lignosulfonate salt dispersants suitable for use with the solid herbicide compositions described herein include Polyfon® H, O, T, and F, Kraftsperse® 25M and Reax® 88B, 825 which are all available from MeadWestvaco (Richmond, VA), and Borresperse® NA, CA and 3A which are available from Borregaard LignoTech (Houston, TX).

The dispersants used in the solid herbicide compositions described herein contain from about 30 g/kg to about 250 g/kg, with respect to the total composition. In some embodiments the solid herbicide compositions described herein may include from about 30 g/kg to about 230 g/kg, from about 30 g/kg to about 210 g/kg, from about 30 g/kg to about 190 g/kg, from about 30 g/kg to about 170 g/kg, from about 30 g/kg to about 150 g/kg, from about 30 g/kg to about 130 g/kg, from about 30 g/kg to about 110 g/kg, from about 30 g/kg to about 90 g/kg, from about 30 g/kg to about 70 g/kg, from about 30 g/kg to about 50 g/kg, or from about 30 g/kg to about 40 g/kg of the dispersants. In some embodiments the solid herbicide compositions described herein may also include from about 50 g/kg to about 250 g/kg, from about 75 g/kg to about 250 g/kg, from about 75 g/kg to about 225 g/kg, from about 75 g/kg to about 200 g/kg, from about 75 g/kg to about 175 g/kg, from about 100 g/kg to about 175 g/kg, from about 125 g/kg to about 175 g/kg, from about 145 g/kg to about 165 g/kg, from about 75 g/kg to about 125 g/kg, or from about 85 g/kg to about 115 g/kg of the dispersants.

The anionic surfactants used in the solid herbicide compositions described herein are selected from: salts of alkyl sulfates, such as diethanolammonium lauryl sulfate; alkylarylsulfonate salts, such as calcium dodecylbenzenesulfonate; soaps, such as sodium stearate; alkylnaphthalene-sulfonate salts, such as sodium dibutylnaphthalenesulfonate; dialkyl esters of sulfosuccinate salts, such as sodium di(2-ethylhexyl) sulfosuccinate; salts of N-alkyl-N-fatty acid taurates; salts of mono- and dialkyl phosphate esters; and salts of polycarboxylates, such as sodium polycarboxylate.

In some embodiments, the anionic surfactant used in the solid herbicide compositions described herein may include an N-alkyl-N-fatty acid taurate surfactant such as, for example, sodium N-methyl-N-oleyl taurate which is available from Solvay Rhodia (Houston, TX) as Geropon® T-77.

In some embodiments, the anionic surfactant used in the solid herbicide compositions described herein may include a sodium polycarboxylate surfactant such as Geropon® T-36 (Solvay Rhodia).

The solid herbicide compositions described herein include from about 10 g/kg to about 100 g/kg, of at least one anionic surfactant. In some embodiments the solid herbicide compositions described herein may include from about 10 g/kg to about 90 g/kg, from about 10 g/kg to about 80 g/kg, from about 10 g/kg to about 70 g/kg, from about 10 g/kg to about 60 g/kg, from about 10 g/kg to about 50 g/kg, from about 10 g/kg to about 40 g/kg, from about 10 g/kg to about 30 g/kg, from about 20 g/kg to about 50 g/kg, or from about 20 g/kg to about 40 g/kg, of at least one anionic surfactant. In some embodiments the solid herbicide compositions described herein may include from about 20 g/kg to about 100 g/kg, from about 30 g/kg to about 100 g/kg, from about 40 g/kg to about 100 g/kg, from about 50 g/kg to about 100 g/kg, from about 60 g/kg to about 100 g/kg, from about 70 g/kg to about 100 g/kg, or from about 70 g/kg to about 90 g/kg, of at least one anionic surfactant.

The solid buffers useful in the solid herbicide compositions described herein generally are very soluble in water (>20 weight %) and may include an organic or inorganic acid, or a salt thereof. Examples of solid buffers include ammonium sulfate, diammonium phosphate, citric acid, potassium acetate, sodium acetate, and combinations of the solid buffer with a clay.

The solid herbicide compositions described herein include from about 50 g/kg to about 250 g/kg of the solid buffer. In some embodiments the solid herbicide compositions described herein may include from about 60 g/kg to about 240 g/kg, from about 70 g/kg to about 230 g/kg, from about 80 g/kg to about 220 g/kg, from about 90 g/kg to about 210 g/kg, from about 100 g/kg to about 200 g/kg, from about 110 g/kg to about 190 g/kg, from about 120 g/kg to about 180 g/kg, from about 130 g/kg to about 170 g/kg, or from about 140 g/kg to about 160 g/kg of the solid buffer. In some embodiments the solid herbicide compositions described herein may also include from about 50 g/kg to about 250 g/kg, from about 50 g/kg to about 200 g/kg, from about 50 g/kg to about 175 g/kg, from about 50 g/kg to about 150 g/kg, from about 50 g/kg to about 125 g/kg, from about 50 g/kg to about 100 g/kg, from about 50 g/kg to about 90 g/kg, from about 50 g/kg to about 80 g/kg, or from about 50 g/kg to about 70 g/kg of the solid buffer.

Agricultural granules containing active ingredients may also contain solid inert ingredients that can serve as a filler, diluent, carrier, disintegrant, binding agent, processing aid, and/or flow aid and may help maintain the granules in a stable, solid state. These solid inert ingredients may include, for example, clays, starches, silicas, talc (hydrated magnesium silicate), palygorskites, pyrophyllites, attapulgus clay, kaolinite clay, bentonite clay, montmorillonite clay, illite clay and Fuller's earth, and diatomaceous earths such as diatomite, tripolite and kieselgur/kieselguhr, carbohydrates such as dextrines, alkylated celluloses, xanthum gums and guaseed gums, and synthetic polymers such as polyvinyl alcohols, sodium polyacrylates, polyethylene oxides, polyvinylpyrrolidones and urea/formaldehyde polymers. In the absence of effective solid inert ingredients, dry granules may be physically unstable and slowly breakdown forming a dust or powder. Many solid inert ingredients used in agricultural granule formulations generally have good water solubility or dispersibility.

In some embodiments, the solid herbicide compositions described herein may include a filler selected from one or more of a clay such as attapulgus clay, kaolinite clay, bentonite clay, montmorillonite clay, illite clay and Fuller's earth.

In some embodiments, the solid herbicide compositions described herein may include a synthetic polymer selected from a polyvinyl alcohol, a sodium polyacrylate, a polyethylene oxide, a polyvinylpyrrolidone and a urea/formaldehyde copolymer like PergoPak® M which is available from Albemarle Corporation (Baton Rouge, LA), and mixtures thereof.

In some embodiments, the solid herbicide compositions described herein may include a synthetic polymer such as a urea/formaldehyde copolymer like PergoPak® M, which may serve as a disintegrant and a processing aid.

The term "stable" when used to describe the compositions described herein refers to compositions that are stable physically and/or chemically for defined periods of time to the environments in which they are produced, transported and/or stored. Aspects of stable compositions include, but are not limited to: physical stability at temperatures that range from about 0 °C to about 50 °C, compositions that readily wet, disintegrate, disperse and form stable suspensions when poured into water, and retain their biological efficacy when applied, for example, by spray application to target pests, and compositions that contain active ingredients that do not chemically degrade in significant amounts.

In some embodiments, the solid herbicide compositions described herein are stable at temperatures of greater than or equal to about 40 °C for a period of at least 2, 4, 6 or 8 weeks. In some embodiments, the solid herbicide compositions described herein are stable at temperatures greater than or equal to about 54 °C for a period of at least about 2 or 4 weeks.

In some embodiments, the solid herbicide compositions described herein remain stable after storage in sealed containers for at least about 2, 4, 6, or 8 weeks at temperatures of at least about 30 °C, at least about 40 °C, at least about 50 °C, or at least about 54 °C.

In some embodiments, the solid herbicide compositions described herein after storage at the temperatures and conditions described herein, readily wet, disintegrate, disperse and form stable suspensions in cold water that is equal to or less than a temperature of about 5 °C, equal to or less than about 10 °C, equal to or less than about 15 °C, or equal to or less than about 20 °C.

The physical stability of a solid agricultural composition after storage at the temperatures and conditions described herein can be determined by: (1) measuring the time it takes for the composition to fully disperse when added to water (i.e., the dispersion time) and (2) measuring the stability of the resulting suspension (i.e., measurement of the total suspensibility of the sample) and comparing those values to those of the corresponding samples that were measured prior to storage. "Fully disperse", as used herein means, the granules disintegrate into suspended particles. The particle size can vary, but in some embodiments, the particle size is several microns, e.g.,3-10 microns.

The dispersion time of a solid composition is a measure how long it takes for the composition to wet, disintegrate, and fully disperse in water and can be readily determined using the method described herein. The stability of the suspension that forms upon dispersion of a solid composition in water can be determined by measuring how much of the sample remains suspended after a period of time (i.e., the total suspensibility). The total suspensibility of a sample can be determined using CIPAC Method 184. In some embodiments, the solid herbicide compositions described herein after storage at temperatures equal to or greater than room temperature, 30 °C, 40 °C, or 50 °C, readily wet, disintegrate, and fully disperse into suspended particles in room temperature water with a hardness of 342 ppm in less than about 80 seconds, less than about 70 seconds, less than about 60 seconds, less than about 50 seconds, less than about 40 seconds, or less than about 30 seconds.

In some embodiments, the solid herbicide compositions described herein, after storage at temperatures equal to or greater than room temperature, 30 °C, 40 °C, 50 °C, readily wet, disintegrate, disperse and form stable suspensions in room temperature water with a hardness of 342 ppm, have total suspensibilities of not less than about 80%, not less than about 85%, not less than about 90%, not less than about 92%, not less than about 94%, not less than about 95%, not less than about 96%, not less than about 97%, not less than about 98%, or not less than about 99%, as determined by using CIPAC Method 184.

Methods of preparing the described solid herbicidal compositions are also described herein. Granule formulations may be produced using one or more of the following processing methods: (1) pan granulation, (2) mixing agglomeration, (3) extrusion granulation, (4) fluid bed granulation, (5) spray granulation or agglomeration and (6) drum granulation. Also, preparation of granules using a pellet press may be used. The physico-chemical properties of the active ingredient and additives are important to consider when choosing a process to use. G. A. Bell and D. A. Knowles in, "Chemistry and Technology of Agrochemical Formulations," D. A. Knowles, editor, (Kluwer Academic Publishers, 1998), pages 41-114, describe the types of granules used in agricultural chemical formulations and provide many references to the production of these solid formulations. Powder formulations can be produced by vacuum drying, rotary evaporator drying, spray drying, drum drying or other processing methods that are well known to those of normal skill in the art. In any of the processing methods described herein, optional inert ingredients may be added to the composition before, during or after processing to improve the processing or to improve the final quality or stability of the granule or powder. These optional inert ingredients may include, but are not limited to, flowability additives and anti-caking agents such as, for example, hydrophilic precipitated silicas, hydrophilic fumed silicas and clays, anti-foaming agents, wetting agents, binders, dispersing agents, solid diluents and carriers.

In one embodiment the described solid herbicidal compositions may be prepared by a method which comprises:
(1) combining together the dry ingredients and air milling them;
(2) adding water to the air milled, dry ingredients;
(3) mixing the air milled, dry ingredients and water to form a paste (or extrudant);
(4) extruding the paste (or extrudant) to provide extruded granules; and
(5) drying the extruded granules to provide the described solid herbicidal compositions.

Another aspect of the described solid herbicidal compositions includes adding one or more additional pesticide active ingredients, plant growth regulators, or safeners to the solid herbicidal compositions. These pesticide active ingredients, plant growth regulators and safeners may include one or more of an herbicide, an insecticide, a fungicide, a plant growth regulator or an herbicide safener.

Suitable additional herbicides that may be added to the solid herbicidal composition described herein include clodinafop-propargyl, clethodim, cycloxydim, diclofop-methyl, fenoxaprop-ethyl + isoxidifen-ethyl, pinoxaden, sethoxydim, tepraloxydim, tralkoxydim, 2,4-D esters and amines, 2,4-MCPA, 2,4-MCPA esters and amines, acetochlor, acifluorfen, alachlor, amidosulfuron, aminopyralid, aminotriazole, ammonium thiocyanate, anilifos, benfuresate, bentazon, bentazone-sodium, benthiocarb, benzobicyclon, benzofenap, bifenox, bispyribac-sodium, bromobutide, butachlor, cafenstrole, carfentrazone-ethyl, chlorimuron, chlorpropham, cinosulfuron, clomazone, clomeprop, clopyralid, cumyluron, daimuron, diflufenican, dimepiperate, dimethametryn, diquat, dithiopyr, EK2612, EPTC, esprocarb, ET-751, ethbenzanid, fenoxasulfone, fentrazamide, flazasulfuron, fluazifop, flufenacet, flufenpyr-ethyl, flumioxazin, flupyrsulfuron, fluroxypyr, fluroxypyr esters and salts, fomesafen, foramsulfuron, glufosinate, glufosinate-P, glyphosate, imazamethabenz, imazapic, imazapyr, imazaquin, indanofan, ioxynil, ipfencarbazone, isoxaben, MCPB, mefenacet, mesosulfuron, mesotrione, metolachlor, molinate, monosulfuron, MSMA, orthosulfamuron, oryzalin, oxadiargyl, oxadiazon, oxazichlomefone, oxyfluorfen, paraquat, pendimethalin, pentoxazone, pethoxamid, picloram, piperophos, pretilachlor, prohexadione-calcium, propachlor, propanil, propisochlor, propyzamide, prosulfuron, pyrabuticarb, pyraclonil, pyrazogyl, pyrazolynate, pyrazoxyfen, pyribenzoxim, pyridate, pyriftalid, pyriminobac-methyl, pyrimisulfan, quinoclamine, quinclorac, S-3252, simazine, simetryne, s-metolachlor, sulcotrione, sulfentrazone, sulfosate, tefuryltrione, thenylchlor, thiazopyr, thiobencarb, triafamone, triclopyr, triclopyr-esters and amines, trifluralin, trinexapac-ethyl and tritosulfuron.

The compositions and methods described herein can be used in conjunction with glyphosate, glufosinate, dicamba, phenoxy auxins, pyridyloxy auxins, aryloxyphenoxypropionates, acetyl CoA carboxylase (ACCase) inhibitors, imidazolinones, acetolactate synthase (ALS) inhibitors, 4-hydroxyphenyl-pyruvate dioxygenase (HPPD) inhibitors, protoporphyrinogen oxidase (PPO) inhibitors, triazines, and bromoxynil on glyphosate-tolerant, glufosinate-tolerant, dicamba-tolerant, phenoxy auxin-tolerant, pyridyloxy auxin-tolerant, aryloxyphenoxypropionate-tolerant, ACCase-tolerant, imidazolinone-tolerant, ALS-tolerant, HPPD-tolerant, PPO-tolerant, triazine-tolerant, bromoxynil-tolerant crops and crops possessing multiple or stacked traits conferring tolerance to multiple chemistries and/or multiple modes of action.

Suitable insecticides that may be added to the solid herbicidal composition described herein include abamectin, acephate, acetamiprid, acrinathrin, *alpha-cypermethrin, alpha-*endosulfan, azadirachtin, azinphos-ethyl, azinphos-methyl, bendiocarb, benfuracarb, bensultap, *beta*-cyfluthrin, *beta*-cypermethrin, bifenthrin, bufencarb, buprofezin, butacarb, cadusafos, carbaryl, carbofuran, carbosulfan, cartap, cartap hydrochloride, chlorantraniliprole, chlorfenapyr, chlorfenvinphos, chlorfluazuron, chlormephos, chlorpyrifos, chlorpyrifos-methyl, chromafenozide, clothianidin, cyantraniliprole, cyfluthrin, cyhalothrin, cypermethrin, deltamethrin, diazinon, dicrotophos, diflubenzuron, dimethoate dinotefuran, disulfoton, emamectin, emamectin benzoate, endosulfan, endothion, endrin, EPN, esfenvalerate, etaphos, ethiofencarb, ethion, ethiprole, ethoate-methyl, etofenprox, fenamiphos, fenazaflor, fenethacarb, fenitrothion, fenobucarb, fenpropathrin, fensulfothion, fenthion, fenthion-ethyl, fenvalerate, fipronil, flonicamid, flubendiamide, flucythrinate, fonofos, fufenozide, furathiocarb, *gamma-*cyhalothrin*, gamma*-HCH, halfenprox, halofenozide, heptenophos, hyquincarb, imidacloprid, indoxacarb, isazofos, isobenzan, isocarbophos, isofenphos, isofenphos-methyl, isoprocarb, isothioate, isoxathion, kinoprene, *lambda*-cyhalothrin, lepimectin, lufenuron, malathion, methamidophos, methomyl, methoxyfenozide, mevinphos, mexacarbate, milbemectin, monocrotophos, nitenpyram, novaluron, omethoate, oxamyl, oxydemeton-methyl, oxydeprofos, oxydisulfoton, parathion, parathion-methyl, penfluron, permethrin, phenthoate, phorate, phosalone, phosfolan, phosmet, phosphamidon, pirimetaphos, pirimicarb, pirimiphos-ethyl, pirimiphos-methyl, primidophos, profenofos, profluthrin, promecarb, propaphos, propoxur, prothiofos, pymetrozine, pyrafluprole, , pyridalyl, pyrifluquinazon, pyriprole, pyriproxyfen, spinetoram, spinosad, spirotetramat, sulfoxaflor, sulprofos, *tau*-fluvalinate, tebufenozide, tebufenpyrad, teflubenzuron, tefluthrin, tetramethylfluthrin, *theta*-cypermethrin, thiacloprid, thiamethoxam, thicrofos, thiocyclam, thiocyclam oxalate, thiodicarb, thiometon, thiosultap, thiosultap-disodium, thiosultap-monosodium, thuringiensin, tolfenpyrad, triazophos, triflumuron and *zeta*-cypermethrin.

Suitable fungicides that may be added to the solid herbicidal composition described herein include tricyclazole, phthalide, carpropamide, pyroquilon, diclocymet, fenoxanil, probenazole, isoprothiolane, iprobenfos, isotianil, tiadinil, kasugamycin, flutolanil, mepronil, pencycuron, polyoxins, validamycin, toclophos-methyl, boscalid, penthiopyrad, thifluzamide, bixafen, fluopyram, isopyrazam, propiconazole, difenoconazole, fenbuconazole, ipconazole, triadimefon, hexaconazole, azoxystrobin, metaminostrobin, orysastrobin and acibenzolar-S-methyl. Some of these fungicides may not be effective for disease control when applied at the timing of an herbicide granule application because fungal disease propagation and growth cycles may not match the targeted weed growth cycles. The effective use and application timing of these fungicides can be easily determined by one of normal skill in the art.

Suitable herbicide safeners that may be added to the solid herbicidal composition described herein include benoxacor, benthiocarb, cloquintocet-mexyl, daimuron, dichlormid, dicyclonon, dimepiperate, fenchlorazole-ethyl, fenclorim, flurazole, fluxofenim, furilazole, Harpin proteins, isoxadifen-ethyl, mefenpyr-diethyl, mephenate, MG 191, MON 4660, naphthalic anhydride (NA), oxabetrinil, R29148 and *N*-phenyl-sulfonylbenzoic acid amides.

Suitable plant growth regulators that may be added to the solid herbicidal composition described herein include 2,4-D, 2,4-DB, IAA, IBA, naphthaleneacetamide, α-naphthaleneacetic acid, kinetin, zeatin, ethephon, aviglycine, 1-methylcyclopropene (1-MCP), ethephon, gibberellins, gibberellic acid, abscisic acid, ancymidol, flurprimidol, mefluidide, paclobutrazol, tetcyclacis, uniconazole, brassinolide, brassinolide-ethyl and ethylene.

In addition to the compositions and uses set forth above, the solid herbicidal compositions described herein may be used in combination with one or more additional compatible ingredients. Other additional compatible ingredients may include, for example, one or more agrochemical active ingredients, surfactants, dyes, fertilizers and micronutrients, pheromones and many other additional ingredients providing functional utility, such as, for example, stabilizers, fragrants and dispersants. When the compositions described herein are used in combination with additional active ingredients the presently claimed compositions can be formulated with the other active ingredient or active ingredients as herbicidal solid compositions, tank mixed in water with the other active ingredient or active ingredients for spray application or applied sequentially with the other active ingredient or active ingredients in separate solid or spray applications.

In addition, the solid herbicidal compositions described herein may optionally be blended with other solid compositions containing additional active ingredients to form a composition containing, for example, a physically uniform blend of granules or a physically uniform blend of powders. These blends of solid compositions may be used to control undesirable weeds in various crops and non-crop environments.

Surfactants conventionally used in the art of formulation and which may optionally be used in the present formulations are described, inter alia, in "McCutcheon's Detergents and Emulsifiers Annual", MC Publishing Corp., Ridgewood, New Jersey, 1998 and in "Encyclopedia of Surfactants", Vol. I-III, Chemical publishing Co., New York, 1980-81. These surface-active agents can be anionic, cationic or nonionic in character and can be employed as emulsifying agents, wetting agents, suspending agents, or for other purposes. Typical surface-active agents include salts of alkyl sulfates, such as diethanolammonium lauryl sulfate; alkylarylsulfonate salts, such as calcium dodecylbenzenesulfonate; alkylphenol-alkylene oxide addition products, such as nonylphenol-Cis ethoxylate; soaps, such as sodium stearate; alkylnaphthalene-sulfonate salts, such as sodium dibutylnaphthalenesulfonate; dialkyl esters of sulfosuccinate salts, such as sodium di(2-ethylhexyl) sulfosuccinate; quaternary amines, such as lauryl trimethylammonium chloride; block copolymers of ethylene oxide and propylene oxide; salts of mono and dialkyl phosphate esters. Oftentimes, some of these surfactants can be used interchangeably as an agricultural adjuvant, as a liquid carrier or as a surface active agent.

The term herbicide as used herein means an active ingredient that kills, controls, or otherwise adversely modifies the growth of at least one type of plant. A herbicidally effective or vegetation controlling amount of a herbicide is an amount of active ingredient which causes an adversely modifying effect and includes deviations from natural development of the plant, killing, regulation, desiccation, retardation, and the like. The terms "plants" and "vegetation" include emerging seedlings as well as established and dormant vegetation.

The solid herbicide compositions described herein offer acceptable herbicidal efficacy and crop safety when used to control weeds in cereal crops by spray application. The solid herbicide compositions may be added to or diluted in an aqueous spray mixture for agricultural application such as for selective weed control in crop fields. Such compositions are typically diluted with an inert carrier, such as water, before application. The diluted compositions, which are usually applied, for example, to weeds, the locus of weeds or the locus of where weeds may eventually emerge, in some embodiments contain from about 0.0001 to about 1 weight percent of an active ingredient or from 0.001 to about 0.05 weight percent of an active ingredient. The present compositions can be applied, for example, to weeds or their locus by the use of conventional ground or aerial sprayers, by addition to irrigation water and by other conventional means known to those skilled in the art.

The following Examples are presented to illustrate various aspects of the compositions and methods described herein and should not be construed as limitations to the claims.

### Examples

### Dispersion and Total Suspensibility Test Methods

### Dispersion Time Measurement

a) 0.1 g sample of granules was placed into a 25 mL beaker;
b) 100 mL of 342 ppm hard water was added into a 100 mL stoppered measuring cylinder at room temperature;
c) The granules were poured into the measuring cylinder. A stop watch was started. A stopper was inserted into the cylinder and immediately inverted through 180°, then brought back to the original starting position. The whole operation was completed in approximately 2 seconds.
d) The inversion was repeated at 10 second intervals thereafter. After each complete inversion, the sample was examined for the presence of undispersed or undissolved granules. The sample was continually inverted until all granules are completely dispersed or dissolved.

### Total Suspensibility Measurement

a) Sufficient sample (b grams) was weighed out to make up 250 mL of a suspension in water of a concentration recommended in the product use directions.
b) The weighed sample was placed in a 250 mL beaker and approximately 50 mL of the standard water was added. The mixtures was swirled by hand in a circular motion at a rate of 120 times per minute for 2 minutes.
c) The suspension was transferred to a measuring cylinder, which had previously been brought to a temperature of 20°C. The graduated cylinder was made up to 250 mL with standard water at 20 °C and a stopper was inserted. The cylinder was inverted 30 times in one minute through 180 degrees and back again. The cylinder was placed in the water bath in an upright position free from vibration and not in direct sunlight. After 30 minutes, the top 225 mL (9/10ths) of the contents was removed in 10 to 15 seconds using a suction tube, taking care not to disturb the sediment in the cylinder. It was ensured that the tip of the tube was always only a few mm below the surface of the liquid.
d) The content of solids was determined in the sediment gravimetrically. After removing 9/10ths of the suspension, the remaining 1/10^{th} of the suspension at the bottom of the measuring cylinder was transferred into a tared evaporating dish by rinsing with distilled water and dry to a constant weight. The mass of the residue was recorded to the nearest 0.01 g (a).
e) Calculation: total suspensibility (wt%) = 111(b-a)/b where a = dry mass of the lower 25 mL of the suspension (in grams); b = the mass in grams of the sample being tested.

### Preparation of Representative Samples of the Solid Herbicide Compositions Described Herein and Storage Stability Evaluations

### Sample 1.

To a blender were added pyroxsulam (77.32 g), halauxifen-methyl (21.72 g), cloquintocet acid (108.70 g), Polyfon® F (30.00 g), Geropon® T-77 (7.50 g), Pergopak® M (36.00 g), and anhydrous citric acid (18.76 g). The powder mixture was mixed and then passed through an air-mill. Water (25-35 wt%) was then added to the air-milled powder to form an extrudant, which was extruded through a basket extruder. The final extruded granules (0.8 mm) were dried at 40 °C.

**Storage stability evaluation:**

| Evaluation | Storage conditions (Time/Temp) | Sample 1 |
|---|---|---|
| Dispersion Time (342 ppm water used) | 2 weeks / Room Temp | 5 inversions and 49 seconds |
| | 2 weeks / 54 °C | 5 inversions and 46 seconds |
| | 4 weeks / 54 °C | 5 inversions and 48 seconds |
| Total Suspensibility (342 ppm water used) | 2 weeks / Room Temp | 101.1% |
| | 2 weeks / 54 °C | 98.4% |
| | 4 weeks / 54 °C | 100.0% |

### Sample 2.

To a blender were added pyroxsulam (64.37 g), halauxifen-methyl (17.93 g), cloquintocet acid (90.31 g), Polyfon® F (12.5 g), Geropon® T-77 (12.50 g), Pergopak® M (15.00 g), kaolin clay (12.50 g) and ammonium sulfate (24.90 g). The powder mixture was mixed and then passed through an air-mill. Water (25-35 wt%) was then added to the air-milled powder to form an extrudant, which was extruded through a basket extruder. The final extruded granules (0.8 mm) were dried at 40 °C.

**Storage stability evaluation:**

| Evaluation | Storage conditions (Time/Temp) | Sample 2 |
|---|---|---|
| Dispersion Time (342 ppm water used) | 2 weeks / Room Temp | 4 inversions and 34 seconds |
| | 2 weeks / 54 °C | 4 inversions and 39 seconds |
| | 4 weeks / 54 °C | n/a |
| Total Suspensibility (342 ppm water used) | 2 weeks / Room Temp | 101.6% |
| | 2 weeks / 54 °C | 100.5% |
| | 4 weeks / 54 °C | n/a |

### Sample 3.

To a blender were added pyroxsulam (30.61 g), halauxifen-methyl (10.63 g), cloquintocet acid (65.02 g), Polyfon® F (30.00 g), Geropon® T-77 (5.00 g), Pergopak® M (30.00 g), anhydrous citric acid (15.00 g), and kaolin clay (13.73 g). The powder mixture was mixed and then passed through an air-mill. Water (25-35 wt%) was then added to the air-milled powder to form an extrudant, which was extruded through a basket extruder. The final extruded granules (0.8 mm) were dried at 40 °C.

**Storage stability evaluation:**

| Evaluation | Storage conditions (Time/Temp) | Sample 3 |
|---|---|---|
| Dispersion Time (342 ppm water used) | 2 weeks / Room Temp | 6 inversions and 52 seconds |
| | 2 weeks / 54 °C | 6 inversions and 56 seconds |
| | 4 weeks / 54 °C | 6 inversions and 55 seconds |
| Total Suspensibility (342 ppm water used) | 2 weeks / Room Temp | 101.3% |
| | 2 weeks / 54 °C | 99.5% |
| | 4 weeks / 54 °C | 101.6% |

### Sample 4.

To a blender were added pyroxsulam (46.32 g), halauxifen-methyl (16.08 g), cloquintocet acid (96.56 g), Polyfon® F (15.00 g), Geropon® T-77 (15.00 g), Pergopak® M (30.00 g), ammonium sulfate (40.53 g), and kaolin clay (40.53 g). The powder mixture was mixed and then passed through an air-mill. Water (25-35 wt%) was then added to the air-milled powder to form an extrudant, which was extruded through a basket extruder. The final extruded granules (0.8 mm) were dried at 40 °C.

**Storage stability evaluation:**

| Evaluation | Storage conditions (Time/Temp) | Sample 4 |
|---|---|---|
| Dispersion Time (342 ppm water used) | 2 weeks / Room Temp | 3 inversions and 23 seconds |
| | 2 weeks / 54 °C | 3 inversions and 25 seconds |
| | 8 weeks / 40 °C | 3 inversions and 25 seconds |
| Total Suspensibility (342 ppm water used) | 2 weeks / Room Temp | 102.1 % |
| | 2 weeks / 54 °C | 99.9 % |
| | 8 weeks / 40 °C | 97.4 % |

## Claims

1. A solid herbicidal composition comprising:
a) from 50 grams active ingredient per kilogram (g ai/kg) to 600 g ai/kg, with respect to the total composition, of a first herbicide active ingredient selected from a group consisting of azimsulfuron, bensulfuron-methyl, cinosulfuron, cloransulam-methyl, cyclosulfamuron, diclosulam, ethoxysulfuron, florasulam, flucetosulfuron, flumetsulam, flupyrsulfuron, foramsulphuron, halosulfuron-methyl, imazaquin, imazethabenz, imazethapyr, imazamox, imazosulfuron, iodosulfuron, mesosulphuron, metazosulfuron, metosulam, metsulfuron, nicosulfuron, penoxsulam, primisulfuron-methyl, propyrisulfuron, pyrazosulfuron-ethyl, rimsulfuron, sulphosulphuron, thifensulfuron, trifloxysulfuron, tritosulphuron, and salt or esters thereof and the compounds of the Formula 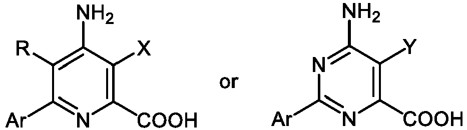 wherein
Ar represents a phenyl group substituted with one to four substituents independently selected from the group consisting of halogen, C₁-C₆ alkyl, C₁-C₆ alkoxy, C₂-C₄ alkoxyalkyl, C₂-C₆ alkylcarbonyl, C₁-C₆ alkylthio, C₁-C₆ haloalkyl, C₁-C₆ haloalkoxy, C₂-C₄ haloalkoxyalkyl, C₂-C₆ haloalkylcarbonyl, C₁-C₆ haloalkylthio, -OCH₂CH₂-, -OCH₂CH₂CH₂-,
-OCH₂O-, and -OCH₂CH₂O-;
R represents H or F;
X represents Cl or vinyl;
Y represents CI, vinyl or methoxy; and
salts and esters thereof;
b) from 50 grams active ingredient per kilogram (g ai/kg) to 600 g ai/kg, with respect to the total composition, of pyroxsulam;
c) from 50 g ai/kg to 600 g ai/kg, with respect to the total composition, of cloquintocet acid or a salt thereof;
d) from 30 g ai/kg to 250 g ai/kg, with respect to the total composition, of a lignosulfonate salt;
e) from 10 g/kg to 100 g/kg, with respect to the total composition, of an anionic surfactant selected from the group consisting of salts of alkyl sulfates, alkylarylsulfonate salts, soaps, alkyl¬naphthalene-sulfonate salts, dialkyl esters of sulfo¬succinate salts, salts of N-alkyl-N-fatty acid taurates; salts of mono- and dialkyl phosphate esters; and salts of polycarboxylates; and
f) from 50 g/kg to 250 g/kg, with respect to the total composition, of a solid buffer.

2. The solid herbicidal composition of Claim 1, wherein the solid herbicidal composition is an extruded granule.

3. The solid herbicidal composition of Claim 1 or 2, further comprising a disintegrant.

4. The solid herbicidal composition of claim 3, wherein the disintegrant is a urea-formaldehyde co-polymer.

5. The solid herbicidal composition of any of claims 1-4, wherein the solid buffer is ammonium sulfate or citric acid.

6. The solid herbicidal composition of any of claims 1-5, wherein the first herbicide active ingredient is halauxifen-methyl.

7. A method for preparing a solid herbicidal composition comprising:
a) providing and combining together the dry ingredients described in any of claims 1-6 and air milling them;
b) adding water to the air milled, dry ingredients;
c) mixing the air milled, dry ingredients and water to form an extrudant;
d) extruding the extrudant to provide extruded granules; and
e) drying the extruded granules.

## Patentansprüche

1. Eine feste herbizide Zusammensetzung umfassend:
a) von 50 g Wirkstoff pro Kilogramm (g ai/kg) bis 600 g ai/kg, bezogen auf die Gesamtzusammensetzung, eines ersten herbiziden Wirkstoffs ausgewählt aus einer Gruppe bestehend aus Azimsulfuron, Bensulfuron-Methyl, Cinosulfuron, Cloransulam-Methyl, Cyclosulfamuron, Diclosulam, Ethoxysulfuron, Florasulam, Flucetosulfuron, Flumetsulam, Flupyrsulfuron, Foramsulphuron, Halosulfuron-Methyl, Imazaquin, Imazethabenz, Imazethapyr, Imazamox, Imazosulfuron, lodosulfuron, Mesosulphuron, Metazosulfuron, Metosulam, Metsulfuron, Nicosulfuron, Penoxsulam, Primisulfuron-Methyl, Propyrisulfuron, Pyrazosulfuron-Ethyl, Rimsulfuron, Sulphosulphuron, Thifensulfuron, Trifloxysulfuron, Tritosulphuron und Salzen oder Estern davon und Verbindungen der Formel 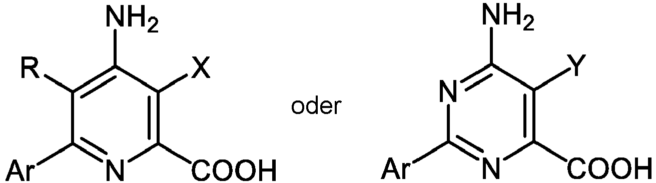 wobei
Ar eine Phenylgruppe, substituiert mit einem bis vier Substituenten unabhängig ausgewählt aus der Gruppe bestehend aus Halogen, C₁-C₆-Alkyl, C₁-C₆-Alkoxy, C₂-C₄-Alkoxyalkyl, C₂-C₆-Alkylcarbonyl, C₁-C₆-Alkylthio, C₁-C₆-Halogenalkyl, C₁-C₆-Halogenalkoxy, C₂-C₄-Halogenalkoxyalkyl, C₂-C₆-Halogenalkylcarbonyl, C₁-C₆-Halogen-alkylthio, -OCH₂CH₂-, -OCH₂CH₂CH₂-, -OCH₂O- und
-OCH₂CH₂O- darstellt;
R H oder F darstellt;
X Cl oder Vinyl darstellt;
Y Cl, Vinyl oder Methoxy darstellt; und
Salzen oder Estern davon;
b) von 50 g Wirkstoff pro Kilogramm (g ai/kg) bis 600 g ai/kg, bezogen auf die Gesamtzusammensetzung, an Pyroxsulam;
c) von 50 g ai/kg bis 600 g ai/kg, bezogen auf die Gesamtzusammensetzung, an Cloquintocetsäure oder einem Salz davon;
d) von 30 g ai/kg bis 250 g ai/kg, bezogen auf die Gesamtzusammensetzung, von einem Lignosulfonatsalz;
e) von 10 g/kg bis 100 g/kg, bezogen auf die Gesamtzusammensetzung, eines anionischen oberflächenaktiven Mittels, ausgewählt aus der Gruppe bestehend aus Salzen von Alkylsulfaten, Alkylarylsulfonatsalzen, Seifen, Alkylnaphthalinsulfonatsalzen, Dialkylestern von Sulfobernsteinsäuresalzen, Taurinsalzen von N-Alkyl-N-Fettsäuren; Salzen von Mono- und Dialkylphosphatestern und Salzen von Polycarbonsäuren; und
f) von 50 g/kg bis 250 g/kg, bezogen auf die Gesamtzusammensetzung, eines festen Puffers.

2. Die feste herbizide Zusammensetzung gemäß Anspruch 1, wobei die feste herbizide Zusammensetzung ein extrudiertes Granulat ist.

3. Die feste herbizide Zusammensetzung gemäß Anspruch 1 oder 2, des Weiteren umfassend ein Zerfallsmittel.

4. Die feste herbizide Zusammensetzung gemäß Anspruch 3, wobei das Zerfallsmittel ein Harnstoff-Formaldehyd-Copolymer ist.

5. Die feste herbizide Zusammensetzung gemäß irgendeinem der Ansprüche 1 bis 4, wobei der feste Puffer Ammoniumsulfat oder Zitronensäure ist.

6. Die feste herbizide Zusammensetzung gemäß irgendeinem der Ansprüche 1 bis 5, wobei der erste herbizide Wirkstoff Halauxifen-Methyl ist.

7. Ein Verfahren zur Herstellung einer festen herbiziden Zusammensetzung umfassend:
a) Bereitstellen und miteinander Vereinen der trockenen Inhaltsstoffe, die in irgendeinem der Ansprüche 1 bis 6 beschrieben sind, und Luftstrahlmahlen derselben;
b) Hinzugeben von Wasser zu den luftstrahlgemahlenen trockenen Inhaltsstoffen;
c) Mischen der luftstrahlgemahlenen trockenen Inhaltsstoffe und des Wassers, um eine zu extrudierende Masse zu bilden;
d) Extrudieren der zu extrudierenden Masse, um extrudiertes Granulat bereitzustellen und
e) Trocknen des extrudierten Granulats.

## Revendications

1. Composition herbicide solide comprenant :
a) de 50 grammes de composant actif par kilogramme (g ca/kg) à 600 g ca/kg, par rapport à la composition totale, d'un premier composant actif herbicide choisi dans l'ensemble constitué par l'azimsulfuron, le bensulfuron-méthyle, le cinosulfuron, le cloransulame-méthyle, le cyclosulfamuron, le diclosulame, l'éthoxysulfuron, le florasulame, le flucétosulfuron, le flumetsulame, le flupyrsulfuron, le foramsulfuron, l'halosulfuron-méthyle, l'imazaquine, l'imazéthabenz, l'imazéthapyr, l'imazamox, l'imazosulfuron, l'iodosulfuron, le mésosulfuron, le métazosulfuron, le métosulame, le metsulfuron, le nicosulfuron, le pénoxsulame, le primisulfuron-méthyle, le propyrisulfuron, le pyrazosulfuron-éthyle, le rimsulfuron, le sulfosulfuron, le thifensulfuron, le trifloxysulfuron, le tritosulfuron, et leurs sels et esters et les composés de formule 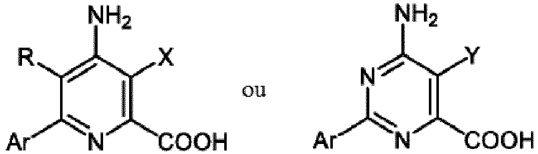 formules dans lesquelles
Ar représente un groupe phényle portant un à quatre substituant(s) choisi(s) indépendamment dans l'ensemble constitué par halogéno, alkyle en C₁-C₆, alcoxy en C₁-C₆, alcoxyalkyle en C₂-C₄, alkylcarbonyle en C₂-C₆, alkyl(C₁-C₆)thio, halogénoalkyle(C₁-C₆), halogénoalcoxy(C₁-C₆), halogéno-alcoxyalkyle(C₂-C₄), halogénoalkylcarbonyle(C₂-C₆), halogénoalkyl(C₁-C₆)-thio, -OCH₂CH₂-, -OCH₂CH₂CH₂-, -OCH₂O-, et -OCH₂CH₂O- ;
R représente un atome d'hydrogène ou de fluor ;
X représente un atome de chlore ou un groupe vinyle ;
Y représente un atome de chlore, un groupe vinyle ou méthoxy ; et
les sels et esters de tels composés ;
b) de 50 grammes de composant actif par kilogramme (g ca/kg) à 600 g ca/kg, par rapport à la composition totale, de pyroxsulame ;
c) de 50 g ca/kg à 600 g ca/kg, par rapport à la composition totale, de cloquintocet acide ou d'un sel de celui-ci ;
d) de 30 g ca/kg kg à 250 g ca/kg, par rapport à la composition totale, d'un sel de lignosulfonate ;
e) de 10 g/kg à 100 g/kg, par rapport à la composition totale, d'un tensioactif anionique choisi dans l'ensemble constitué par les sels d'alkylsulfates, les sels d'alkylarylsulfonates, les savons, les sels d'alkylnaphtalènesulfonates, les esters dialkyliques de sels de sulfosuccinate, les sels de N-alkyl-N-taurates d'acides gras ; les sels d'esters phosphate de mono- et dialkyle ; et les sels de polycarboxylates ; et
f) de 50 g/kg à 250 g/kg, par rapport à la composition totale, d'un tampon solide.

2. Composition herbicide solide selon la revendication 1, où la composition herbicide solide est un granule extrudé.

3. Composition herbicide solide selon la revendication 1 ou 2, comprenant en outre un désintégrant.

4. Composition herbicide solide selon la revendication 3, dans laquelle le désintégrant est un copolymère urée-formaldéhyde.

5. Composition herbicide solide selon l'une quelconque des revendications 1 à 4, dans laquelle le tampon solide est du sulfate d'ammonium ou de l'acide citrique.

6. Composition herbicide solide selon l'une quelconque des revendications 1 à 5, dans laquelle le premier composant actif herbicide est l'halauxifène-méthyle.

7. Procédé pour la préparation d'une composition herbicide solide, comprenant les étapes consistant à :
a) fournir et associer ensemble les composants secs décrits dans l'un quelconque des revendications 1 à 6 et les broyer par jets d'air ;
b) ajouter de l'eau aux composants secs, broyés par jets d'air ;
c) mélanger les composants secs, broyés par jets d'air, et de l'eau pour former un mélange à extruder ;
d) extruder le mélange à extruder pour obtenir des granules extrudés ; et
e) sécher les granules extrudés.
